# EUROPÄISCHE PATENTSCHRIFT

(11) **EP 3 003 956 B1**
(45) Veröffentlichungstag und Bekanntmachung des Hinweises auf die Patenterteilung: **28.09.2016**
(21) Anmeldenummer: 14724754.8
(22) Anmeldetag: 19.05.2014
(51) Int. Cl.: B67C 3/00, B67C 3/22, F04B 11/00, F17D 1/20, F16L 55/052

(54) **VERFAHREN ZUM DÄMPFEN VON DRUCKPULSATIONEN**
METHOD FOR DAMPING PRESSURE PULSATIONS
PROCÉDÉ PERMETTANT D'AMORTIR DES PULSATIONS DE PRESSION

(30) Priorität: 29.05.2013 AT 503632013
(43) Veröffentlichungstag der Anmeldung: 13.04.2016
(73) Patentinhaber: Moser, Volker, 8010 Graz (AT)
(72) Erfinder: Moser, Volker, 8010 Graz (AT)
(74) Vertreter: Babeluk, Michael
(86) Internationale Anmeldenummer: PCT/EP2014/060178
(87) Internationale Veröffentlichungsnummer: WO 2014/191242

(56) Entgegenhaltungen:
- EP-A2- 1 485 215
- WO-A2-2010/115510
- WO-A2-2012/025095
- DE-A1- 19 706 578
- US-A1- 2010 154 910
- US-B1- 6 264 069

## Beschreibung

Die Erfindung betrifft ein Verfahren und eine Vorrichtung zum Dämpfen von Druckpulsationen eines flüssigen Produkts. Ein Verfahren mit den Merkmalen des Oberbegriffs des Anspruchs 1 und eine Vorrichtung mit den Merkmalen des Oberbegriffs des Anspruchs 7 sind aus EP 1 485 215 A2 bekannt.

Insbesondere in der Lebensmittelindustrie ist es beispielsweise in Abfüllanlagen erforderlich, Druckpulsationen zu dämpfen, die entstehen können, wenn Ventile oder Schieber betätigt werden oder regelbare Pumpen die Förderleistung rasch ändern. Blasen- oder Membrandämpfer, wie sie im übrigen Industriebereichen erfolgreich eingesetzt werden, dürfen in der Lebensmittelindustrie in der Regel nicht verwendet werden, da es nicht möglich ist, diese Bauteile zuverlässig zu reinigen oder eine Kontamination auch dann sicher zu verhindern, wenn die Membran porös wird.

Es ist daher in diesem Bereich üblich geworden, Pulsationsdämpfer zu verwenden, die senkrechte Flüssigkeitssäulen einsetzen, um Druckstöße abzubauen. Bei der Flüssigkeit handelt es sich um das transportierte Produkt, wobei oberhalb der Flüssigkeitssäule typischerweise ein mit Inertgas gefüllter Gasraum vorgesehen ist. Solche Lösungen sind beispielsweise in der oben erwähnten EP 1 485 215 A oder der DE 197 06 578 A beschrieben.

Bei der Betrachtung eines solchen Verfahrens muss man grundsätzlich verschiedene Betriebsmodi unterscheiden:
Während des Produktionsvorganges wird das flüssige Produkt in einer Rohrleitung geführt und es besteht die oben dargestellte Notwendigkeit, Druckpulsationen zu dämpfen.

In bestimmten Abständen ist es erforderlich, einen Reinigungsvorgang durchzuführen, wobei die Anlagenteile mit einem Reinigungsmedium gespült werden. Dabei ist es stets notwendig sicherzustellen, dass alle Abschnitte des Systems vom Reinigungsmedium erfasst werden und keine Toträume gebildet werden.

Die vorliegende Erfindung geht aus von einem Verfahren, bei dem
- während eines Produktionsvorganges ein flüssiges Produkt über einen Zulaufabschnitt, ein Bypassventil und einen Ablaufabschnitt gefördert wird, wobei von dem Zulaufabschnitt ein erstes Steigrohr abzweigt und von dem Ablaufabschnitt ein zweites Steigrohr abzweigt, und in den Steigrohren jeweils eine Flüssigkeitssäule mit einem darüber liegenden Gasraum vorliegt, so dass Druckstöße durch Schwankungen der Flüssigkeitssäulen gedämpft werden, und bei dem
- während eines Reinigungsvorganges das flüssige Produkt bei geschlossenem Bypassventil über das erste Steigrohr und das zweite Steigrohr geführt wird.

Diese bekannten Lösungen werden so betrieben, dass während des Produktionsbetriebs das Bypassventil geöffnet ist und ein Ventil, das im oberen Bereich zwischen dem ersten Steigrohr und dem zweiten Steigrohr angeordnet ist, geschlossen ist. Somit stehen zwei Flüssigkeitssäulen zur Verfügung, ober denen jeweils ein Gasraum vorliegt, wobei die beiden Gasräume nicht miteinander verbunden sind. Eine Spülung des Systems kann dadurch erfolgen, dass das Bypassventil geschlossen wird und das Medium über die beiden Steigrohre geführt wird, wobei das dazwischen angeordnete Ventil geöffnet ist.

Nachteilig an den bekannten Lösungen ist, dass das Rohrleitungssystem mit den beiden Steigrohren aufwändig ist und dass konstruktionsbedingt bei einer Spülung, die zur Reinigung des Systems durchgeführt wird, oder um bei einem Wechsel des transportierten Mediums eine Vermischung zu vermeiden, stets Toträume verbleiben, die aus hygienischer Sicht bedenklich sind. Es besteht bei einem Produktwechsel auch die Gefahr einer unerwünschten Vermischung der verschiedenen Produkte.

Überdies sind bekannte Lösungen stets mit einer Vielzahl von Ventilen ausgestattet. Dies erhöht die Komplexität und vergrößert die Gefahr von Verkeimung.

Aufgabe der vorliegenden Erfindung ist es, diese Nachteile zu vermeiden und eine Lösung anzugeben, die einen einfachen Aufbau aufweist und verbesserte Möglichkeiten bietet, Kontaminationen sicher zu vermeiden.

Erfindungsgemäß ist vorgesehen, dass eine der Flüssigkeitssäulen in einem Innenlumen eines Steigrohres und die andere Flüssigkeitssäule in einem Außenlumen zwischen den zwei ineinander angeordneten Steigrohren geführt wird.

Dieses Verfahren ermöglicht es, die Apparatur einfach und platzsparend zu gestalten. Wesentlich ist jedoch die Vermeidung schädlicher Toträume, wodurch die Reinigung erleichtert bzw. verbessert wird, und die Verringerung der Gefahr einer Vermischung beim Produktwechsel.

Ein besonderer Vorteil besteht darin, dass die Anzahl der erforderlichen Ventile verringert werden kann.

Ein bevorzugter Aspekt der Erfindung besteht auch darin, dass während des Produktionsvorganges ein gemeinsamer Gasraum über den beiden Flüssigkeitssäulen vorliegt. Dadurch wird die Dynamik der Pulsationsdämpfung begünstigt, da ein beständiger Druckausgleich zwischen den beiden Flüssigkeitssäulen erfolgt.

Vorzugsweise ist vorgesehen, dass während des Reinigungsvorganges beide Steigrohre vollständig mit einem Reinigungsmedium geflutet werden. Dadurch kann eine vollständige Reinigung sichergestellt werden.

In bevorzugter Weise wird das erfindungsgemäße Verfahren so geführt, dass während des Produktionsvorganges das Produkt bei geschlossenem Bypassventil über den Zulaufabschnitt, ein weiteres Bypassventil und den Ablaufabschnitt geführt wird, wobei das weitere Bypassventil im Inneren eines der beiden Steigrohre gelegen ist und das Innenlumen mit dem Außenlumen unmittelbar verbindet. Diese Verfahrensvariante bietet den Vorteil, dass das weitere Bypassventil in der Art einer leichten Drossel wirkt und daher die Flüssigkeitssäulen im ersten und im zweiten Lumen unabhängig voneinander schwanken können, was die Dämpfungswirkung verbessert. Dies erfolgt in der Weise, dass beispielsweise ein Druckstoß, der durch ein sich schließendes stromabwärtiges Ventil von der Seite des Ablaufabschnitts einwirkt, ein Ansteigen des Flüssigkeitsspiegels in dem Lumen bewirkt, das mit dem Ablaufabschnitt direkt verbunden ist. Der bereits merklich gedämpfte Druckstoß setzt sich über das weitere Bypassventil fort und bewirkt im anderen Lumen ebenfalls eine vergleichsweise geringere Schwankung des Flüssigkeitsspiegels. Dadurch wird eine besonders effiziente Dämpfung erreicht.

Wenn die beiden Steigrohre mit einem Zulaufventil bzw. einem Ablaufventil versehen sind, kann ein Produktwechsel durchgeführt werden, ohne notwendigerweise einen Reinigungsschritt mit Verwendung eines Reinigungsmediums zwischenschalten zu müssen. Es wird dabei so verfahren, dass während eines Produktwechsels das Produkt bei geöffnetem Bypassventil direkt vom Zulaufabschnitt in den Ablaufabschnitt gefördert wird, wobei das erste Steigrohr durch ein geschlossenes Zulaufventil vom Zulaufabschnitt getrennt ist und wobei das zweite Steigrohr durch ein geschlossenes Ablaufventil vom Ablaufabschnitt getrennt ist, und wobei gleichzeitig Gas in den Gasraum eingeblasen wird, um die Steigrohre über ein Entleerungsventil zu entleeren.

Eine vollständige Entfernung von Produktrückständen kann insbesondere dadurch sichergestellt werden, dass während des Reinigungsvorganges die Ventile teilweise gepulst betrieben werden, um auch Toträume durch die Reinigung zu erfassen. Dabei wird insbesondere das Bypassventil kurz aufeinanderfolgend geöffnet und geschlossen, so dass auch schwerer zugängliche Bereiche wie etwa Ventilsitze sicher erfasst werden.

Die Erfindung betrifft auch eine Vorrichtung zum Dämpfen von Druckpulsationen, mit einem Zulaufabschnitt, einem mit dem Zulaufabschnitt verbundenen ersten Steigrohr, einem an das erste Steigrohr anschließenden zweiten Steigrohr und einem mit dem zweiten Steigrohr verbundenen Ablaufabschnitt, wobei der Zulaufabschnitt mit dem Ablaufabschnitt über ein Bypassventil verbunden ist.

Erfindungsgemäß ist dabei vorgesehen, dass das erste und das zweite Steigrohr als zwei ineinander angeordnete, vorzugsweise konzentrisch angeordnete Rohre ausgebildet sind, die ein Innenlumen und ein Außenlumen bilden. Das Außenlumen befindet sich dabei in dem Ringraum zwischen dem ersten und dem zweiten Steigrohr.

Vorzugsweise umschließt das erste Steigrohr das Innenlumen und weist im oberen Bereich des vom zweiten Steigrohr umschlossenen Außenlumens ein freies Rohrende auf. Dadurch wird ein gemeinsamer Gasraum ohne Zwischenschaltung von Ventilen oder dgl. verwirklicht, so dass beide Flüssigkeitssäulen stets dem identischen Druck ausgesetzt sind, der auf ihre Oberflächen einwirkt.

Alternativ dazu kann unter Beibehaltung der obigen Vorteile vorgesehen sein, dass das zweite Steigrohr das Innenlumen umschließt und im oberen Bereich des vom ersten Steigrohr umschlossenen Außenlumens ein freies Rohrende aufweist.

Zum Aufbau eines Gasraums mit einem an das Druckniveau der Flüssigkeit angepassten Druck ist insbesondere vorgesehen, dass im oberen Bereich des Außenlumens ein Zufuhranschluss für ein Inertgas und vorzugsweise auch ein Auslassanschluss für ein Inertgas angeordnet ist.

Eine Spülung mit einem geeigneten Gas kann in bevorzugter Weise dadurch ermöglicht werden, dass im unteren Bereich eines Steigrohres ein Entleerungsventil vorgesehen ist.

Es ist auch günstig, wenn das das Innenlumen umschließende Steigrohr bis unmittelbar unter das obere Ende des anderen Steigrohrs geführt ist. Dies bedeutet, dass sich das eine Steigrohr bis fast zum oberen Ende des anderen Steigrohrs erstreckt, so dass lediglich der erforderliche Überströmquerschnitt verbleibt. Dadurch wird sichergestellt, dass bei der Reinigung alle Bereiche des Systems von strömendem Reinigungsmedium benetzt werden.

In einer ersten Ausführungsvariante ist vorgesehen, dass das Innenlumen und das Außenlumen etwa den gleichen Strömungsquerschnitt aufweisen. Damit besitzen die Flüssigkeitssäulen bei gleicher Höhe auch die gleiche Masse und haben daher das gleiche Schwingungsverhalten.

In einer alternativen Ausführungsvariante ist vorgesehen, dass das Innenlumen und das Außenlumens etwa den gleichen hydraulischen Durchmesser aufweisen. Der hydraulische Durchmesser ist hier wie allgemein üblich als Wert definiert, der sich aus der vierfachen Querschnittsfläche geteilt durch den benetzten Umfang ergibt. Im Fall eines Ringraums ergibt das bei vernachlässigter Wandstärke des Rohres den doppelten Durchmesser des zweiten Steigrohres in Bezug auf das erste Steigrohr. Dies bedeutet, dass die Strömungsverhältnisse in den beiden Lumina gleich sind, d.h. insbesondere, dass bei gleicher Strömungsgeschwindigkeit auch die gleiche Reynoldszahl vorliegt.

Eine erste besonders einfache Ausführungsvariante sieht vor, dass der Zulaufabschnitt mit dem ersten Steigrohr unmittelbar verbunden ist und dass der Ablaufabschnitt mit dem zweiten Steigrohr unmittelbar verbunden ist. Damit kann abgesehen von Gasventilen mit einem einzigen Ventil das Auslangen gefunden werden.

Eine Vergrößerung der Flexibilität in der Anwendung kann erreicht werden, wenn das erste Steigrohr über ein Zulaufventil mit dem Zulaufabschnitt verbunden ist und wenn das zweite Steigrohr über ein Ablaufventil mit dem Ablaufabschnitt verbunden ist. Durch die zusätzlichen Ventile können die beiden Lumina vom Produktstrom getrennt werden, so dass bei laufendem Betrieb eine Entleerung und Reinigung durchgeführt werden kann.

Eine weitere Vergrößerung das Anwendungsspektrums kann erreicht werden, indem im unteren Bereich der Steigrohre ein weiteres Bypassventil zum wahlweisen Verbinden der beiden Lumina vorgesehen ist, das das Außenlumen wahlweise mit dem Innenlumen verbindet.

Konstruktiv besonders günstig ist es, wenn das weitere Bypassventil durch die Bewegung eines im ersten Steigrohr angeordneten Kolbens betätigbar ist. Dabei ist vorzugsweise der im ersten Steigrohr angeordnete Kolben über eine in Axialrichtung im ersten Steigrohr verlaufende Kolbenstange betätigbar.

In der Folge wird die Erfindung anhand der in den Figuren dargestellten Ausführungsvarianten näher erläutert. Es zeigen schematisch:
- Fig. 1: den grundsätzlichen Aufbau einer ersten Ausführungsvariante der Erfindung;
- Fig. 2: die Ausführungsvariante der Fig. 1 im Produktionsmodus;
- Fig. 3: die Ausführungsvariante der Fig. 1 im Reinigungsmodus;
- Fig. 4: eine zweite Ausführungsvariante der Erfindung im Produktionsmodus;
- Fig. 5: die Ausführungsvariante der Fig. 4 während der Entleerung bei einem Produktwechsel;
- Fig. 6: die Ausführungsvariante der Fig. 4 im Reinigungsmodus;
- Fig. 7: und Fig. 8 Details der Ausführungsvariante der Fig. 4 bis Fig. 6 mit geöffnetem bzw. geschlossenem weiteren Bypassventil;
- Fig. 9: eine dritte Ausführungsvariante der Erfindung im Produktionsmodus;
- Fig. 10: die Ausführungsvariante der Fig. 9 während der Entleerung bei einem Produktwechsel;
- Fig. 11: die Ausführungsvariante der Fig. 9 im Reinigungsmodus.

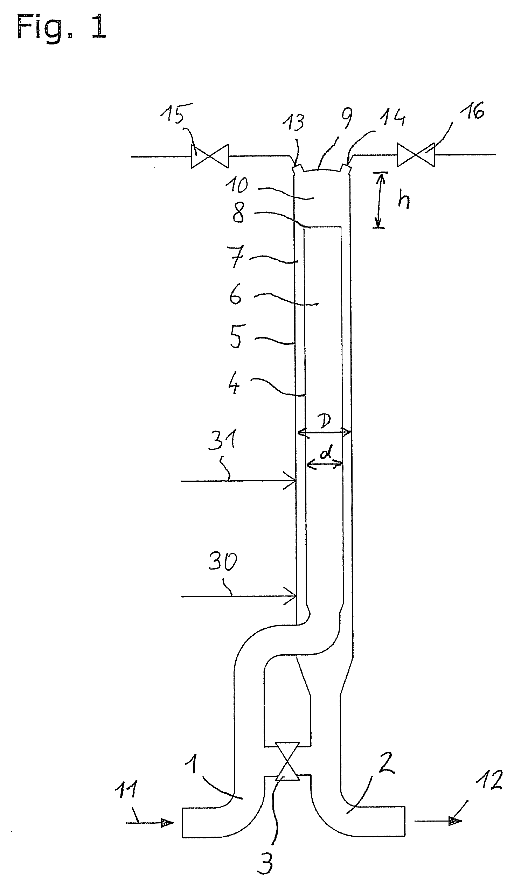

Der grundsätzliche Aufbau einer erfindungsgemäßen Vorrichtung ist in Fig. 1 dargestellt. In einer nicht näher dargestellten Produktionsanlage wird ein flüssiges Produkt, wie etwa Bier in Richtung des Pfeils 11 in einen Zulaufabschnitt 1 in die erfindungsgemäße Vorrichtung gefördert. Über einen Ablaufabschnitt 2 strömt das Produkt weiter in Richtung des Pfeils 12. Der Zulaufabschnitt 1 ist mit dem Ablaufabschnitt 2 über ein erstes Bypassventil 3 verbunden. Hier und in weiterer Folge soll der Begriff Ventil ein Absperrorgan bezeichnen, das technisch auch als Schieber, Klappenventil oder Hahn ausgebildet sein kann.

Nach oben hin setzt sich der Zulaufabschnitt 1 in ein erstes Steigrohr 4 fort, während der Ablaufabschnitt 2 mit einem zweiten Steigrohr 5 verbunden ist, das koaxial um das erste Steigrohr 4 angeordnet ist. Das erste Steigrohr 4 umschließt ein Innenlumen 6, während das zweite Steigrohr 5 mit dem ersten Steigrohr 4 einen Ringraum bildet, der hier als Außenlumen 7 bezeichnet ist und hydraulisch mit dem Ablaufabschnitt 2 verbunden ist.

Im obersten Bereich des zweiten Steigrohrs 5 besitzt das erste Steigrohr 4 ein freies Rohrende 8, das um ein Maß h unterhalb des oberen Endes 9 des zweiten Steigrohrs 5 angeordnet ist. Dieses Maß h entspricht etwa dem Durchmesser D des zweiten Steigrohrs 5, der wiederum etwa 40% größer ist als der Durchmesser d des ersten Steigrohrs 4, so dass der Querschnitt des Innenlumens 6 etwa dem des Außenlumens 7 entspricht. Oberhalb des freien Rohrendes 8 ist ein gemeinsamer Gasraum 10 ausgebildet.

Am oberen Ende 9 sind ein Zufuhranschluss 14 und ein Auslassanschluss 13 für ein Inertgas vorgesehen. Diese Anschlüsse 13, 14 sind jeweils mit einem Gasventil 15, 16 verbunden.

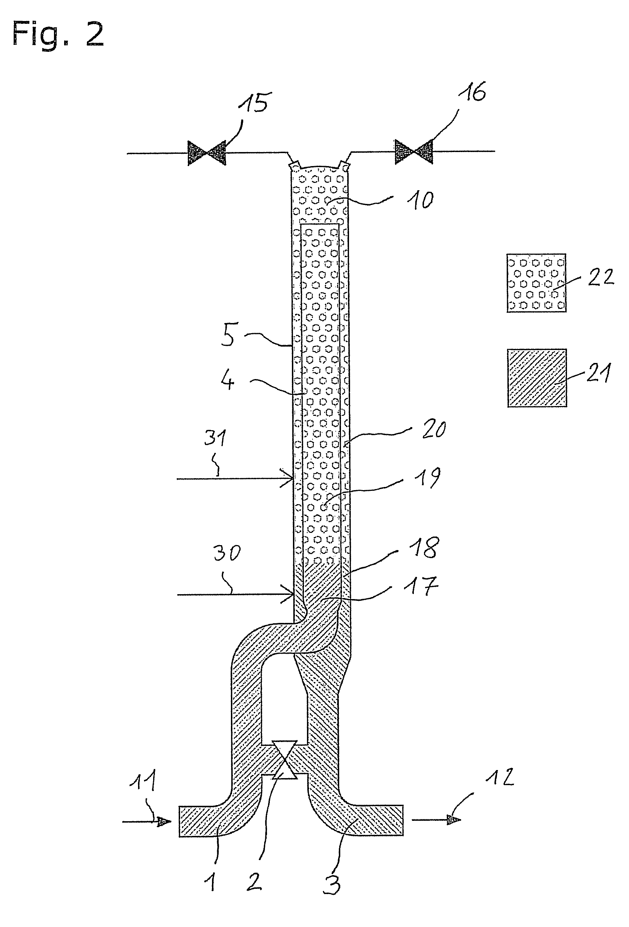

Fig. 2 zeigt die Vorrichtung der Fig. 1 im Produktionsmodus, also in einer typischen Situation während des Produktionsvorganges. Das Produkt strömt vom Zulaufabschnitt 1 über das geöffnete erste Bypassventil 3 in den Ablaufabschnitt 2. Sowohl im Innenlumen 6 als auch im Außenlumen 7 bilden sich entsprechend den Druckverhältnissen Flüssigkeitssäulen 17, 18. Oberhalb der Flüssigkeitssäulen 17, 18 befindet sich jeweils ein Gasraum 19, 20, welche Gasräume 19, 20 oben in den gemeinsamen Gasraum 10 übergehen.

Das Produkt ist hier mit 21 symbolisiert, das Inertgas mit 22.

Die Höhen der Flüssigkeitssäulen 17, 18 können durch den Gasdruck eingestellt werden, indem Inertgas über den Zufuhranschluss 14 zugeführt oder den Auslassanschluss 13 abgeführt wird. Im Gleichgewichtszustand befindet sich der Flüssigkeitsspiegel etwas unterhalb der halben Höhe der Steigrohre 4, 5.

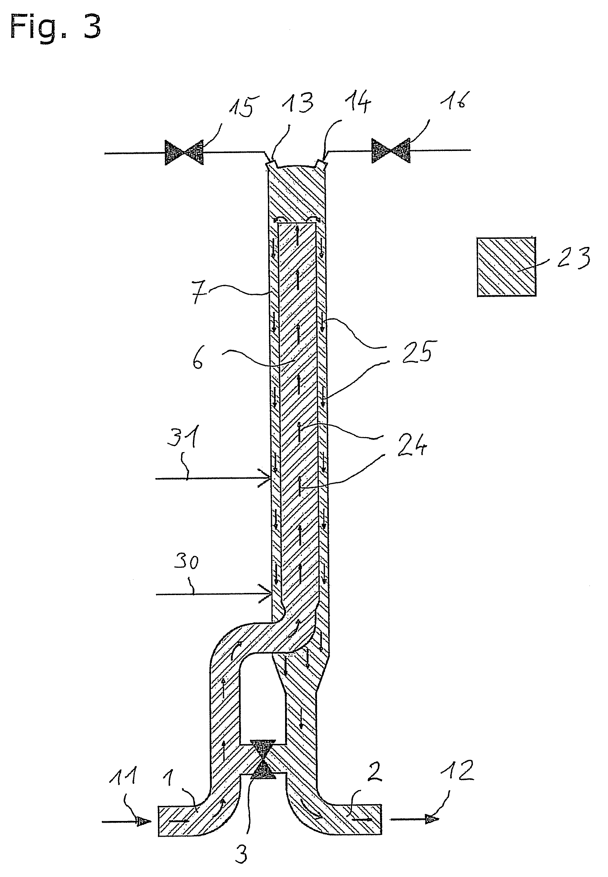

Fig. 3 zeigt die Vorrichtung der Fig. 1 im Reinigungsmodus, also in einer typischen Situation während des Reinigungsvorganges. Durch vollständiges Ablassen des Inertgases und Schließen des ersten Bypassventils 3 wird erreicht, dass ein über den Zulaufabschnitt 1 zugeführtes Reinigungsmedium, das hier mit 23 bezeichnet ist, entsprechend den Pfeilen 24 im Innenlumen 6 nach oben strömt, unter vollständiger Flutung des Gasraums 10 in weiterer Folge entsprechend den Pfeilen 25 im Außenlumen 7 nach unten strömt und über den Ablaufabschnitt 2 abgeführt wird.

Über Sonden 30, 31 kann die Höhe des Flüssigkeitsspiegels in den Lumina 6, 7 überwacht werden.

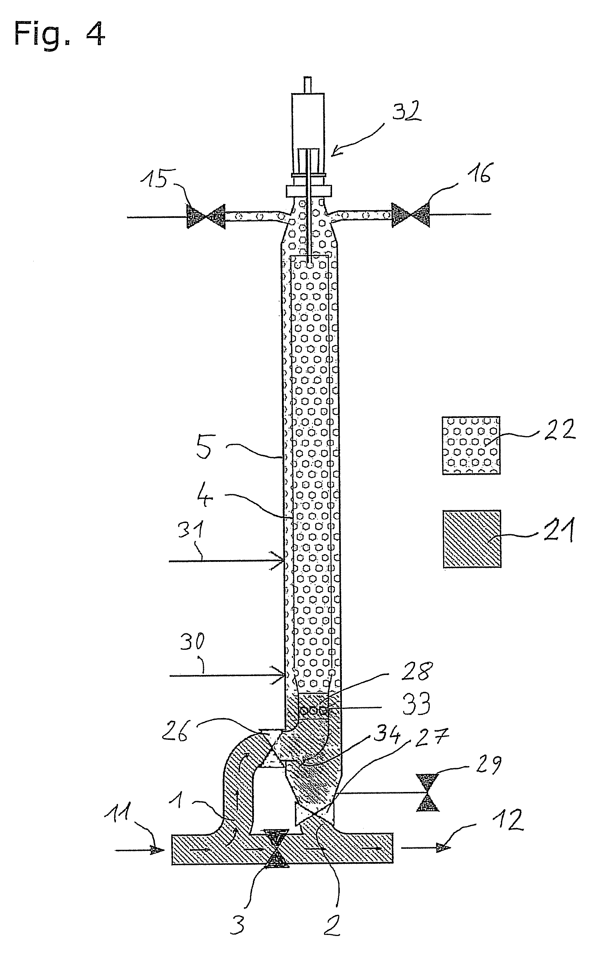

Die Ausführungsvariante von Fig. 4 unterscheidet sich von der oben beschriebenen dadurch, dass im Zulaufabschnitt 1 ein Zulaufventil 26 und im Ablaufabschnitt 2 ein Ablaufventil 27 vorgesehen ist. Darüber hinaus ist im Inneren des zweiten Steigrohres 5 ein weiteres Bypassventil 28 vorgesehen.

Während der Produktion ist wie in Fig. 4 dargestellt das Bypassventil 3 geschlossen, und das Produkt strömt vom Zulaufabschnitt 1 über das geöffnete Zulaufventil 26, das geöffnete weitere Bypassventil 28 und das ebenfalls geöffnete Ablaufventil 27 in den Ablaufabschnitt.

Das weitere Bypassventil 28 ist durch eine am Kopf des zweiten Steigrohres 5 angeordnete Betätigungsvorrichtung 32 betätigt, die einen im ersten Steigrohr angeordneten Kolben 35 mit Hilfe einer Kolbenstange 36 anheben und absenken kann. Dadurch werden Öffnungen 33 des weiteren Bypassventils 28 aufgesteuert bzw. geschlossen. Während der Produktion (Fig. 4) sind diese geöffnet.

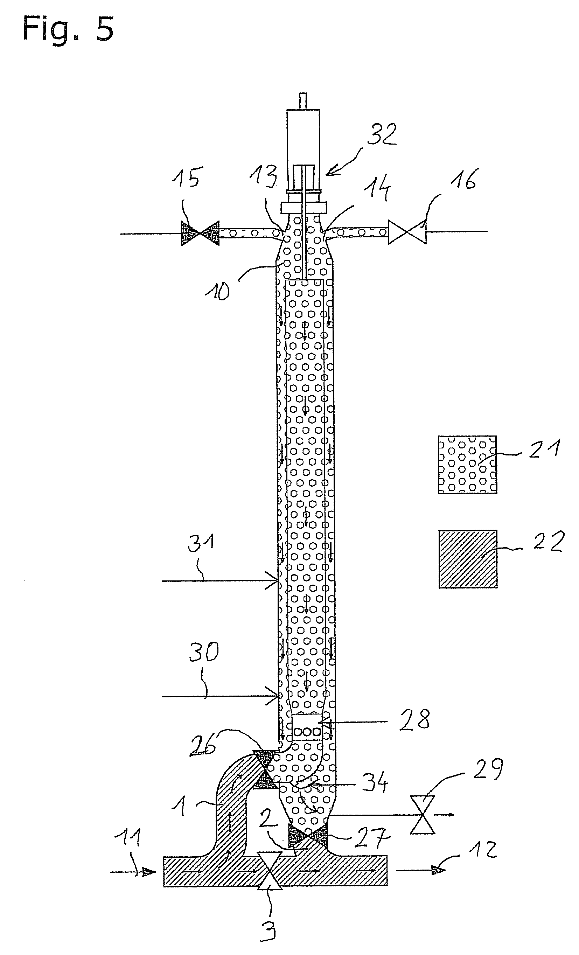

In der Fig. 5 ist die Entleerung bei einem Produktwechsel dargestellt. Ein Produkt kann während dieses Vorgangs weiter über das Bypassventil 3 geführt werden, so dass die Produktion während dieses Vorgangs nicht unterbrochen werden muss. Es ist jedoch zu beachten, dass in diesem Zustand keine Dämpfungswirkung gegeben ist. Zulaufventil 26 und Ablaufventil 27 sind geschlossen.

Über das geöffnete Gasventil 16 und den Zufuhranschluss 14 wird Inertgas in den Gasraum 10 zugeführt und das in den Lumina 6, 7 befindliche Produkt wird nach unten gedrückt und über das Entleerungsventil 29 abgezogen. Das weitere Bypassventil 28 kann hier geöffnet sein, um das Innenlumen 6 zu entleeren, es kann aber auch eine Leckageöffnung 34 am unteren Ende des ersten Steigrohres 4 vorgesehen sein. Dabei handelt es sich um eine Öffnung mit kleinem Durchmesser, die während der Produktion nur eine sehr geringe Durchströmung aufweist, aber bei Bedarf die vollständige Entleerung ermöglicht.

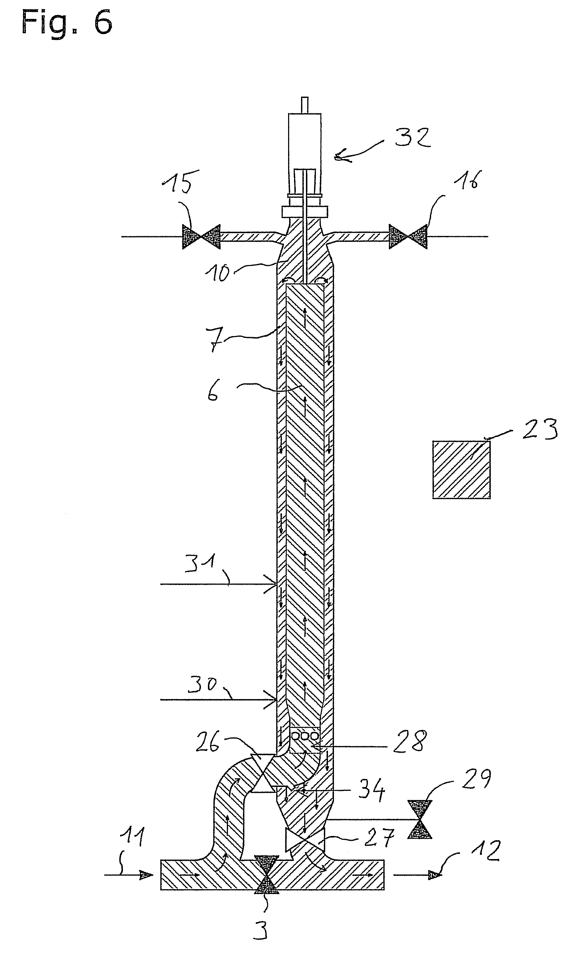

Fig. 6 zeigt die Situation während der Reinigung. Das Bypassventil 3 ist geschlossen, das Reinigungsmedium 23 strömt über das geöffnete Zulaufventil 26 und das Innenlumen 6 in den Gasraum 10, und dann über das Außenlumen 7 und das ebenfalls geöffnete Ablaufventil 27 ab. Das weitere Bypassventil 28 ist ebenfalls geschlossen.

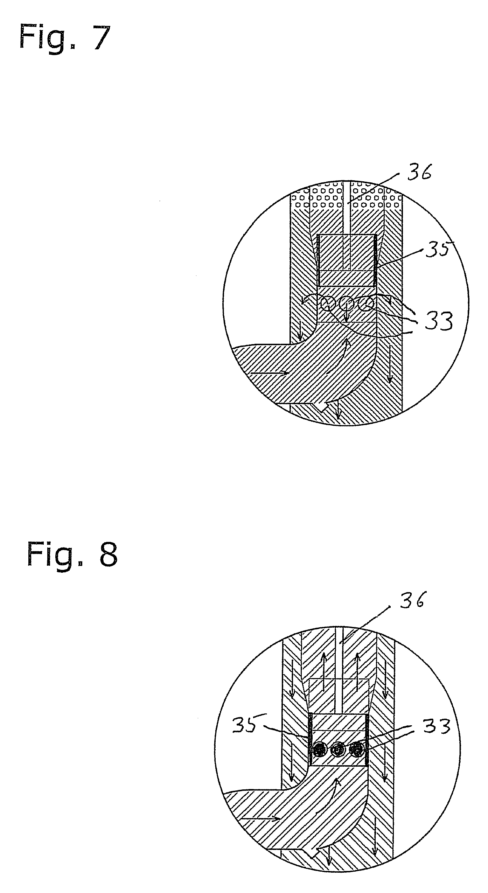

Fig. 7 zeigt das weitere Bypassventil 28 im Detail in geöffnetem Zustand. Der Kolben 35 ist angehoben und gibt so die Öffnungen 33 frei, da das Fluid durch den hohlen Kolben 35 strömen kann.

Fig. 8 zeigt das weitere Bypassventil 28 im Detail in geschlossenem Zustand. Der Kolben 35 ist in dieser Darstellung abgesenkt und verschließt dadurch die Öffnungen 33.

Es ist in alternativer Weise auch möglich, die Betätigung des weiteren Bypassventils 28 durch Verdrehen eines entsprechend ausgebildeten Kolbens zu bewirken, um die Öffnungen 33 zu öffnen du zu verschließen.

Es ist anzumerken, dass bei der hier beschriebenen Ausführungsvariante auch auf das erste Bypassventil 3 verzichtet werden kann. Dann ist keine direkte Verbindung zwischen Zulaufabschnitt 1 und Ablaufabschnitt 2 gegeben und das Produkt strömt auch während der Produktion über das weitere Bypassventil 28.

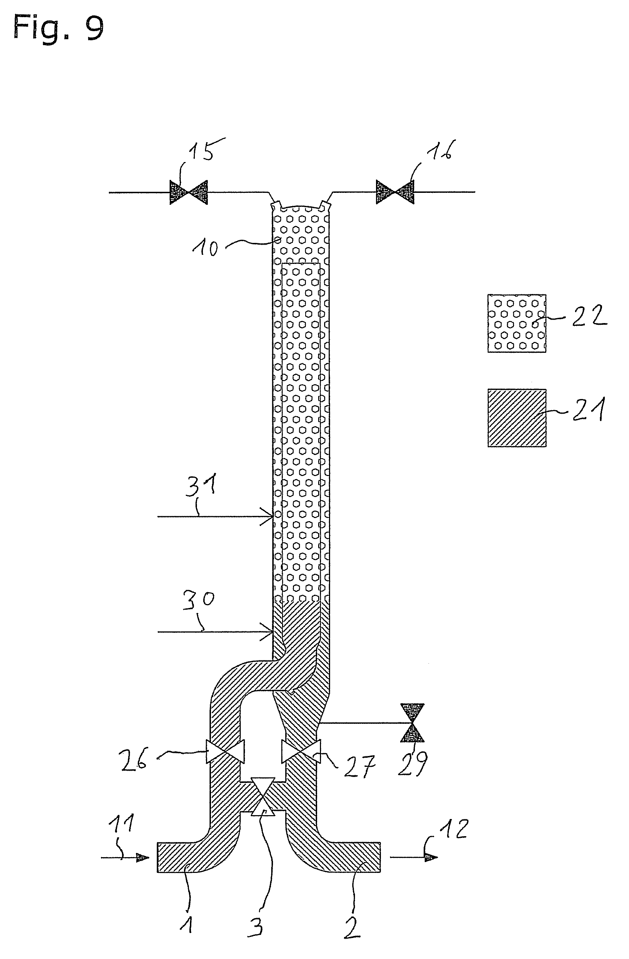

Die Ausführungsvariante der Fig. 9, Fig. 10 und Fig. 11 entspricht der der Fig. 4, Fig. 5 und Fig. 6 in den jeweiligen Betriebszuständen, wobei jedoch kein weiteres Bypassventil 28 ausgeführt ist. Bei der Produktion wird das Produkt daher über das geöffnete Bypassventil 3 geführt.

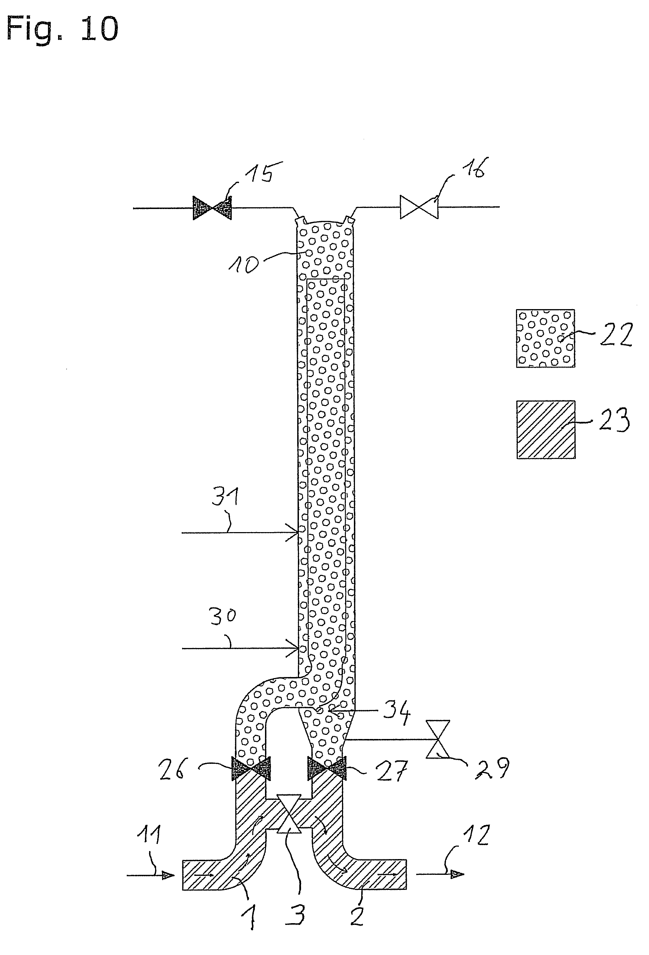

Bei der Entleerung in Fig. 10 ist die Leckageöffnung 34 am unteren Ende des ersten Steigrohres 4 verpflichtend, um auch das Innenlumen 6 entleeren zu können. Im Gegensatz zu der Darstellung der Fig. 5 wird hier während der Entleerung der Bereich von Zulaufabschnitt 1 und Ablaufabschnitt mit Reinigungsmedium gespült.

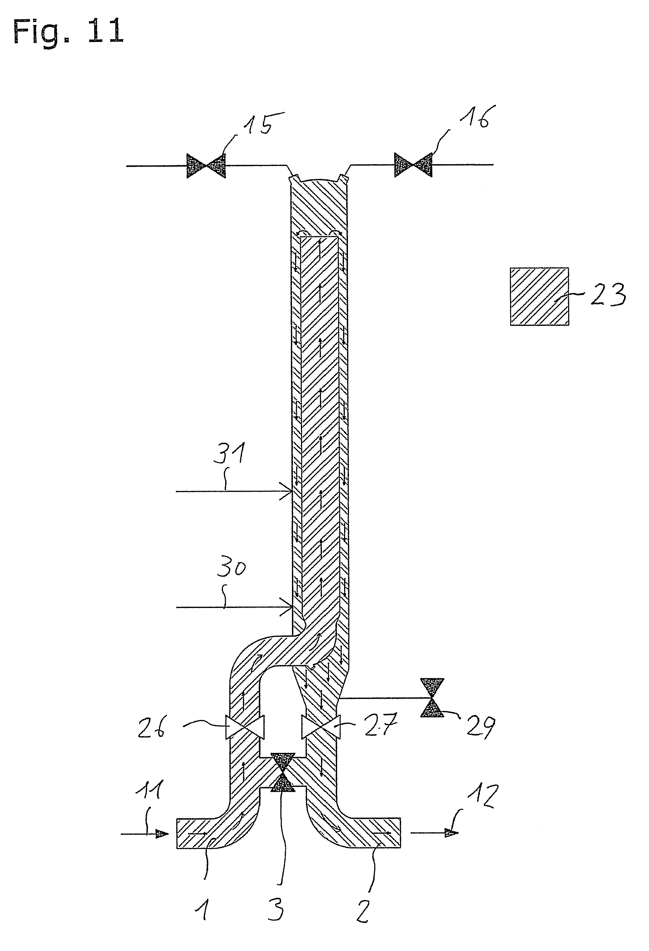

Die Reinigung erfolgt bei Fig. 11 analog zu der von Fig. 6.

## Patentansprüche

1. Verfahren zum Dämpfen von Druckpulsationen eines flüssigen Produkts, bei dem
- während eines Produktionsvorganges ein flüssiges Produkt über einen Zulaufabschnitt (1), ein Bypassventil (3, 28) und einen Ablaufabschnitt (2) gefördert wird, wobei von dem Zulaufabschnitt (1) ein erstes Steigrohr (4) abzweigt und von dem Ablaufabschnitt (2) ein zweites Steigrohr (5) abzweigt, und in den Steigrohren (4, 5) jeweils eine Flüssigkeitssäule (17, 18) mit einem darüber liegenden Gasraum (10) vorliegt, so dass Druckstöße durch Schwankungen der Flüssigkeitssäulen (17, 18) gedämpft werden, und bei dem
- während eines Reinigungsvorganges das flüssige Produkt bei geschlossenem Bypassventil (3, 28) über das erste Steigrohr (4) und das zweite Steigrohr (5) geführt wird,
**dadurch gekennzeichnet, dass** eine der Flüssigkeitssäulen (17) in einem Innenlumen (6) eines Steigrohres (4) und die andere Flüssigkeitssäule (18) in einem Außenlumen (7) zwischen den zwei ineinander angeordneten Steigrohren (4, 5) erhalten wird.

2. Verfahren nach Anspruch 1, **dadurch gekennzeichnet, dass** während des Produktionsvorganges ein gemeinsamer Gasraum (10) über den beiden Flüssigkeitssäulen (17, 18) vorliegt.

3. Verfahren nach einem der Ansprüche 1 oder 2, **dadurch gekennzeichnet, dass** während des Reinigungsvorganges beide Steigrohre (4, 5) vollständig mit einem Reinigungsmedium geflutet werden.

4. Verfahren nach einem der Ansprüche 1 bis 3, **dadurch gekennzeichnet, dass** während des Produktionsvorganges das Produkt an einem geschlossenen ersten Bypassventil (3) vorbei über den Zulaufabschnitt (1) durch ein weiteres, geöffnetes Bypassventil (28) und den Ablaufabschnitt (2) geführt wird, wobei das weitere Bypassventil (28) im Inneren eines der beiden Steigrohre (5) gelegen ist und das Innenlumen (6) mit dem Außenlumen (7) unmittelbar verbindet.

5. Verfahren nach einem der Ansprüche 1 bis 4, **dadurch gekennzeichnet, dass** während eines Produktwechsels das Produkt bei geöffnetem Bypassventil (3, 28) direkt vom Zulaufabschnitt (1) in den Ablaufabschnitt (2) gefördert wird, wobei das erste Steigrohr (4) durch ein geschlossenes Zulaufventil (26) vom Zulaufabschnitt (1) getrennt ist und wobei das zweite Steigrohr (5) durch ein geschlossenes Ablaufventil (27) vom Ablaufabschnitt (2) getrennt ist, und wobei gleichzeitig Gas in den Gasraum (19) eingeblasen wird, um die Steigrohre (4, 5) über ein Entleerungsventil (29) zu entleeren.

6. Verfahren nach einem der Ansprüche 1 bis 5, **dadurch gekennzeichnet, dass** während des Reinigungsvorganges die Ventile (3, 26, 27, 28) teilweise gepulst betrieben werden, um auch Toträume durch die Reinigung zu erfassen.

7. Vorrichtung zum Dämpfen von Druckpulsationen eines flüssigen Produkts, mit einem Zulaufabschnitt (1), einem mit dem Zulaufabschnitt (1) verbundenen ersten Steigrohr (4), einem an das erste Steigrohr (4) hydraulisch anschließenden zweiten Steigrohr (5) und einem mit dem zweiten Steigrohr (5) verbundenen Ablaufabschnitt (2), wobei der Zulaufabschnitt (1) mit dem Ablaufabschnitt (2) über ein Bypassventil (3, 28) verbunden ist, **dadurch gekennzeichnet, dass** das erste und das zweite Steigrohr (4, 5) als zwei ineinander angeordnete, vorzugsweise konzentrisch angeordnete Rohre ausgebildet sind, die ein Innenlumen (6) und ein Außenlumen (7) bilden.

8. Vorrichtung nach Anspruch 7, **dadurch gekennzeichnet, dass** im oberen Bereich des Außenlumens (7) ein Zufuhranschluss (14) für ein Inertgas und vorzugsweise auch ein Auslassanschluss (13) für ein Inertgas vorgesehen ist.

9. Vorrichtung nach einem der Ansprüche 7 oder 8, **dadurch gekennzeichnet, dass** im unteren Bereich eines Steigrohres (4, 5) ein Entleerungsventil (29) vorgesehen ist.

10. Vorrichtung nach einem der Ansprüche 7 bis 9, **dadurch gekennzeichnet, dass** das das Innenlumen (6) umschließende Steigrohr (4) bis unmittelbar unter das obere Ende des anderen Steigrohrs (5) geführt ist.

11. Vorrichtung nach einem der Ansprüche 7 bis 10, **dadurch gekennzeichnet, dass** das Innenlumen (6) und das Außenlumen (7) etwa den gleichen Strömungsquerschnitt aufweisen.

12. Vorrichtung nach einem der Ansprüche 7 bis 10, **dadurch gekennzeichnet, dass** das Innenlumen (6) und das Außenlumen (7) etwa den gleichen hydraulischen Durchmesser aufweisen.

13. Vorrichtung nach einem der Ansprüche 7 bis 12, **dadurch gekennzeichnet, dass** der Zulaufabschnitt (1) mit dem ersten Steigrohr (4) unmittelbar verbunden ist und dass der Ablaufabschnitt (2) mit dem zweiten Steigrohr (5) unmittelbar verbunden ist.

14. Vorrichtung nach einem der Ansprüche 7 bis 12, **dadurch gekennzeichnet, dass** das erste Steigrohr (4) über ein Zulaufventil (26) mit dem Zulaufabschnitt (1) verbunden ist und dass das zweite Steigrohr (5) über ein Ablaufventil (27) mit dem Ablaufabschnitt (2) verbunden ist.

15. Vorrichtung nach einem der Ansprüche 7 bis 14, **dadurch gekennzeichnet, dass** im unteren Bereich der Steigrohre (4, 5) zusätzlich zu einem ersten Bypassventil (3) ein weiteres Bypassventil (28) zum wahlweisen Verbinden der beiden Lumina (6, 7) vorgesehen ist, wobei vorzugsweise das weitere Bypassventil (28) durch die Bewegung eines im ersten Steigrohr (4) angeordneten Kolbens (35) über eine in Axialrichtung im ersten Steigrohr (4) verlaufende Kolbenstange (36) betätigbar ist.

## Claims

1. A method for damping pressure pulsations of a liquid product, in which
- a liquid product is conveyed via a feed section (1), a bypass valve (3, 28) and an outlet section (2) during a production process, wherein a first rising pipe (4) branches off from the feed section (1), and a second rising pipe (5) branches off from the outlet section (2), and a liquid column (17, 18) is provided in each rising pipe (4, 5) with a gas chamber (10) arranged over the column such that pressure surges due to fluctuations of the liquid columns (17, 18) are dampened, and in which
- during a cleaning process the liquid product is conveyed via the first rising pipe (4) and the second rising pipe (5) while the bypass valve is closed (3, 28),
**characterised in that** one of the liquid columns (17) is maintained in an inner lumen (6) of a rising pipe (4) and the other liquid column (18) is maintained in an outer lumen (7) between the two rising pipes (4, 5) which are arranged one inside the other.

2. A method according to claim 1, **characterised in that** during the production process a common gas chamber (10) is present above the two liquid columns (17, 18).

3. A method according to one of the claims 1 or 2, **characterised in that** during the cleaning process both rising pipes (4, 5) are flooded completely with a cleaning medium.

4. A method according to one of the claims 1 to 3, **characterised in that** during the production process the product is guided past a closed first bypass valve (3) via the feed section (1) through a further open bypass valve (28) and the outlet section (2), wherein the further bypass valve (28) is disposed in the interior of one of the two rising pipes (5) and directly connects the inner lumen (6) to the outer lumen (7).

5. A method according to one of the claims 1 to 4, **characterised in that** during a change in the product the product is conveyed directly from the feed section (1) to the outlet section (2) when the bypass valve (3, 28) is open, wherein the first rising pipe (4) is separated by a closed feed valve (26) from the feed section (1), and wherein the second rising pipe (5) is separated by a closed outlet valve (27) from the outlet section (2), and wherein simultaneously gas is injected into the gas chamber (19) in order to discharge the rising pipes (4, 5) via a drain valve (29).

6. A method according to one of the claims 1 to 5, **characterised in that** during the cleaning process the valves (3, 26, 27, 28) are operated in a partially pulsed manner in order to also include dead spaces by the cleaning.

7. An apparatus for damping pressure pulsations of a liquid product, comprising a feed section (1), a first rising pipe (4) connected to the feed section (1), a second rising pipe (5) which is hydraulically connected to the first rising pipe (4), and an outlet section (2) which is connected to the second rising pipe (5), wherein the feed section (1) is connected to the outlet section (2) via a bypass valve (3, 28), **characterised in that** the first and the second rising pipe (4, 5) are formed as two pipes which are arranged inside each other, are preferably arranged concentrically, and form an inner lumen (6) and an outer lumen (7).

8. An apparatus according to claim 7, **characterised in that** a feed connection (14) for an inert gas and preferably also an outlet connection (13) for an inert gas are provided in the upper region of the outer lumen (7).

9. An apparatus according to one of the claims 7 or 8, **characterised in that** a drain valve (29) is provided in the bottom region of a rising pipe (4, 5).

10. An apparatus according to one of the claims 7 to 9, **characterised in that** the rising pipe (4) surrounding the inner lumen (6) is guided up to immediately below the upper end of the other rising pipe (5).

11. An apparatus according to one of the claims 7 to 10, **characterised in that** the inner lumen (6) and the outer lumen (7) have approximately the same flow cross-section.

12. An apparatus according to one of the claims 7 to 10, **characterised in that** the inner lumen (6) and the outer lumen (7) have approximately the same hydraulic diameter.

13. An apparatus according to one of the claims 7 to 12, **characterised in that** the feed section (1) is directly connected to the first rising pipe (4), and the outlet section (2) is directly connected to the second rising pipe (5).

14. An apparatus according to one of the claims 7 to 12, **characterised in that** the first rising pipe (4) is connected via a feed valve (26) to the feed section (1), and the second rising pipe (5) is connected via an outlet valve (27) to the outlet section (2).

15. An apparatus according to one of the claims 7 to 14, **characterised in that** a further bypass valve (28) for the selective connection of the two lumens (6, 7) is provided in addition to a first bypass valve (3) in the bottom region of the rising pipes (4, 5), wherein preferably the further bypass valve (28) can be actuated by the movement of a plunger (35) arranged in the first rising pipe (4) via a plunger rod (36) extending in the axial direction in the first rising pipe (4).

## Revendications

1. Procédé d'amortissement de pulsations de pression d'un produit liquide selon lequel :
- pendant un processus de production on refoule un produit liquide par l'intermédiaire d'un segment d'arrivée (1), d'une soupape de dérivation (3, 28) et d'un segment d'évacuation (2), un premier tube ascendant (4) se branchant sur le segment d'arrivée (2), un second tube ascendant (5) se branchant sur le segment d'évacuation (1), et, dans chacun des tubes ascendants (4, 5) se trouvant une colonne de liquide (17, 18) surmontée par une chambre à gaz (10) de façon à amortir les coups de bélier par oscillations des colonnes de liquide (17, 18), et
- pendant un processus de nettoyage, le produit liquide est transféré dans le premier tube ascendant (4) et le second tube ascendant (5) la soupape de dérivation (3, 28) étant fermée,
**caractérisé en ce que**
l'une des colonnes de liquide (17) est située dans un lumen interne (6) d'un tube ascendant (4) tandis que l'autre colonne de liquide (18) est située dans un lumen externe (7) entre les deux tubes ascendants (4, 5) positionnés l'un dans l'autre.

2. Procédé conforme à la revendication 1,
**caractérisé en ce que**
pendant le processus de production, une chambre de gaz commune (10) est située au-dessus des deux colonnes de liquide (17, 18).

3. Procédé conforme à l'une des revendications 1 et 2,
**caractérisé en ce que**
pendant le processus de nettoyage, les deux tubes ascendants (4, 5) sont totalement remplis d'agent de nettoyage.

4. Procédé conforme à l'une des revendications 1 à 3,
**caractérisé en ce que**
pendant le processus de production, le produit est transféré, en passant à côté de la première soupape de dérivation (3) fermée, par le segment d'arrivée (1) au travers d'une seconde soupape de dérivation (28) ouverte, et le segment d'évacuation (2), la seconde soupape de dérivation (28) étant située à la partie interne de l'un des deux tubes ascendants (5) et reliant directement le lumen interne (6) au lumen externe (7).

5. Procédé conforme à l'une des revendications 1 à 4,
**caractérisé en ce que**
pendant un changement de produit, le produit est refoulé directement, la soupape de dérivation (3, 28) étant ouverte, du segment d'arrivée (1) dans le segment d'évacuation (2), le premier tube ascendant (4) étant séparé du segment d'arrivée (1) par une soupape d'arrivée (26) fermée, le second tube ascendant (5) étant séparé du segment d'évacuation (2) par une soupape d'évacuation (27) fermée, et simultanément, du gaz étant soufflé dans la chambre de gaz (19) pour vider les tubes ascendants (4, 5) par une soupape de vidange (29).

6. Procédé conforme à l'une des revendications 1 à 5,
**caractérisé en ce que**
pendant le processus de nettoyage, les soupapes (3, 26, 27, 28) sont partiellement actionnées de façon pulsée pour que des volumes morts soient également concernés par le nettoyage.

7. Dispositif permettant d'amortir des pulsations de pression d'un produit liquide comportant un segment d'arrivée (1), un premier tube ascendant (4) relié à ce segment d'arrivée (1), un second tube ascendant (5) se connectant hydrauliquement au premier tube ascendant (4) et un segment d'évacuation (2) relié au second tube ascendant (5), le segment d'arrivée (1) étant relié au segment d'évacuation (2) par une soupape de dérivation (3, 28),
**caractérisé en ce que**
le premier et le second tubes ascendants (4, 5) sont réalisés sous la forme de deux tubes montés l'un dans l'autre de préférence concentriquement qui définissent un lumen interne (6) et un lumen externe (7).

8. Dispositif conforme à la revendication 7,
**caractérisé en ce qu'**
il est prévu dans la zone supérieure du lumen externe (7) un raccord d'arrivée (14) d'un gaz inerte, et de préférence également un raccord d'évacuation (13) d'un gaz inerte.

9. Dispositif conforme à l'une des revendications 7 ou 8,
**caractérisé en ce que**
dans la zone inférieure d'un tube ascendant (4, 5), il est prévu une soupape de vidange (29).

10. Procédé conforme à l'une des revendications 7 à 9,
**caractérisé en ce que**
le tube ascendant (4) entourant le lumen interne (6) s'étend jusqu'à directement au-dessous de l'extrémité supérieure de l'autre tube ascendant (5).

11. Dispositif conforme à l'une des revendications 7 à 10,
**caractérisé en ce que**
le lumen interne (6) et le lumen externe (7) ont essentiellement la même section d'écoulement.

12. Dispositif conforme à l'une des revendications 7 à 10,
**caractérisé en ce que**
le lumen interne (6) et le lumen externe (7) ont essentiellement le même diamètre hydraulique.

13. Dispositif conforme à l'une des revendications 7 à 12,
**caractérisé en ce que**
le segment d'arrivée (1) est relié directement au premier tube ascendant (4) et le segment d'évacuation (2) est relié directement au second tube ascendant (5).

14. Dispositif conforme à l'une des revendications 7 à 12,
**caractérisé en ce que**
le premier tube ascendant (4) est relié au segment d'arrivée (1) par l'intermédiaire d'une soupape d'arrivée (26) et le second tube ascendant (5) est relié au segment d'évacuation (2) par l'intermédiaire d'une soupape d'évacuation (27).

15. Dispositif conforme à l'une des revendications 7 à 14,
**caractérisé en ce qu'**
il est en outre prévu dans la zone inférieure des tubes ascendants (4, 5), en plus d'une première soupape de dérivation (3), une seconde soupape de dérivation (28) pour permettre de relier sélectivement les deux lumens (6, 7), et de préférence la seconde soupape de dérivation (28) peut être actionnée par le déplacement d'un piston (35) monté dans le premier tube ascendant (4) par l'intermédiaire d'une tige de piston (36) s'étendant en direction axiale dans le premier tube ascendant (4).
